# EUROPÄISCHE PATENTSCHRIFT

(11) **EP 0 713 418 B1**
(45) Veröffentlichungstag und Bekanntmachung des Hinweises auf die Patenterteilung: **21.10.1998**
(21) Anmeldenummer: 94922789.6
(22) Anmeldetag: 05.08.1994
(51) Int. Cl.: B01D 21/00, B01D 21/06, B01D 21/24, B03B 5/52, B03B 13/00

(54) **VERFAHREN UND VORRICHTUNG ZUM ABSCHEIDEN VON SAND AUS MIT SAND UND ORGANISCHEN STOFFEN BELADENEM ABWASSER**
PROCESS AND DEVICE FOR REMOVING SAND FROM WATER LOADED WITH SAND AND ORGANIC SUBSTANCES
PROCEDE ET DISPOSITIF PERMETTANT D'EXTRAIRE DU SABLE CONTENU DANS DES EAUX USEES CHARGEES EN SABLE ET EN SUBSTANCES ORGANIQUES

(30) Priorität: 13.08.1993 AT 1618/93
(43) Veröffentlichungstag der Anmeldung: 29.05.1996
(73) Patentinhaber: Noggerath Holding GmbH & Co. KG, D-31708 Ahnsen (DE)
(72) Erfinder: ZIERLER, Franz, A-4820 Bad Ischl (AT)
(74) Vertreter: Gleiss, Alf-Olav, Dr.jur. Dipl.-Ing.
(86) Internationale Anmeldenummer: AT9400108
(87) Internationale Veröffentlichungsnummer: WO9505230

(56) Entgegenhaltungen:
- AT-B- 359 009
- DE-A- 1 442 449
- DE-U- 9 209 785
- FR-A- 2 108 715
- FR-A- 2 595 053
- NL-A- 7 212 429
- US-A- 1 959 917
- US-A- 2 933 187
- Book no. , 1990, 'GRUNDOPERATIONEN CHEMISCHER VERFAHRENSTECHNIK, SEITEN 227, 228', VAUCK, W.; MüLLER, H. VCH VERLAGSGESELLSCHAFT MBH, WEINHEIM;NEW YORK
- Book no. , 1975, 'GRUNDLAGEN DER WIRBELSCHICHTTECHNIK, SEITEN 18, 19', BERANEK/ROSE/WINTERSTEIN KRAUSKOPF VERLAG,
- AUFBEREITUNGS-TECHNIK, vol., no.3, 1966, page 139 - 140, FEIL, H.-J. 'SORTIERUNG, KLASSIERUNG UND RüCKGEWINNUNG VON FEINSAND'

## Beschreibung

Die Erfindung bezieht sich auf ein Verfahren zum Abscheiden von Sand aus Sand und organischen Stoffen beladenem Abwasser, das in einem stehenden Behälter in eine Umlaufströmung versetzt wird, in der die organischen Stoffe nach oben bewegt werden, während der Sand nach unten zu einem unten an den Behälter angeschlossenen Austragsförderer absinkt, und erst nach einer Absetzzeit ausgetragen wird sowie auf eine Vorrichtung zur Durchführung des Verfahrens.

Die Druckschrift US-A 2,933,187 offenbart ein Verfahren, bei dem in einem Behälter mit Überlauf und Austragsförderer leichtere von schwereren Bestandteilen getrennt werden. Hierbei wird von unten Spülwasser in den Behälter eingeleitet. Allerdings durchströmt der Spülwasserstrom nicht den nach dem Absetzen mechanisch gerührten Sand, sondern tritt erst oberhalb der Absetzzone in den Behälter ein, wobei er im Gegenstrom auf das dem Behälter zugeführte Gemisch aus schwereren und leichteren Bestandteilen trifft.

In Kläranlagen wird der mit dem Abwasser mitgespülte Sand üblicherweise von den ebenfalls mitgespülten faulfähigen, organischen Stoffen getrennt. Zu diesem Zweck wird der zusammen mit den organischen Stoffen in Auffangbecken gesammelte Sand in einen Sandabscheider gepumpt (vgl. z.B. DE-U-9 209 785). Dieser Sandabscheider besteht im wesentlichen aus einem stehenden, meist trichterförmigen Behälter, der oben einen Überlauf für das mit organischen Stoffen belastete Abwasser bildet und an den unten im Bereich einer Austragsoffnung ein Austragsförderer in Form einer Förderschnecke angeschlossen ist, die nach oben geneigt verläuft, so daß das Austragsende oberhalb der Höhe des Überlaufes zu liegen kommt. Aufgrund einer besonderen Ausführung des Zulaufes für das mit Sand und organischen Stoffen beladene Abwasser wird innerhalb des Behälters eine Umlaufströmung bewirkt, in der die spezifisch leichteren anorganischen Stoffe nach oben schwimmen, während der spezifisch schwerere Sand nach unten zum Austragsförderer absinkt. Die nach oben schwimmenden organischen Stoffe, deren Auftrieb durch einen Lufteintrag in Form von Luftbläschen unterstützt wird, werden mit dem überlaufenden Abwasser aus dem Behälter ausgeschwemmt. Der sich im Bereich des Behälterbodens absetzende Sand kann mit dem Austragsförderer ausgetragen werden, wobei eine Entwässerung des Sandes erfolgt, weil das Austragsende des Förderers höher als der Überlauf des Behälters liegt. Für die Sandaustragung wird ein schrittweiser Betrieb des Austragsförderers empfohlen, um für ein gutes Abscheideergebnis ausreichende Absetzzeiten nach jeder Abwassereinleitung sicherzustellen. Nachteilig bei diesen bekannten Verfahren zum Abscheiden von Sand aus mit Sand und organischen Stoffen beladenem Abwasser ist vor allem, daß der ausgetragene Sand noch mit organischen Stoffen in einer Menge belastet ist, die eine Weiterverwendung dieses Sandes, beispielsweise als Schüttgut für Bauzwecke, ausschließt. Der aus solchen Abwässern abgetrennte Sand muß vielmehr als Sondermüll behandelt und deponiert werden, was aufwendig und kostspielig ist.

Der Erfindung liegt somit die Aufgabe zugrunde, ein Verfahren zum Abscheiden von Sand aus mit Sand und organischen Stoffen beladenem Abwasser der eingangs geschilderten Art so zu verbessern, daß der ausgetragene Sand nur mehr einen unbedenklichen Restanteil an organischen Stoffen aufweist und für Bauzwecke od. dgl. eingesetzt wegen kann.

Die Erfindung löst die gestellte Aufgabe dadurch, daß der abgesetzte Sand unter gleichzeitiger Spülung mit von unten zugeführtem Frischwasser mechanisch gerührt und lediglich in einer Menge ausgetragen wird, die eine vorgegebene Mindesthöhe des abgesetzten Sandes sicherstellt.

Durch das mechanische Rühren des sich im Bodenbereich des Behälters absetzenden Sandes wird nicht nur eine zusätzliche Sichtwirkung mit dem Ergebnis eines schichtweisen Aufbaus des Absetzgutes mit den spezifisch schwereren Teilchen in einer unteren und den spezifisch leichteren Teilchen in einer oberen Schicht erzielt, sondern auch eine mechanische Reinigung des Sandes durch die aneinanderreibenden Sandkörner sichergestellt, so daß die allenfalls an den Sandkörnern anhaftenden organischen Stoffe von den Sandkörnern abgerieben und aus dem Absetzgut mit Hilfe des von unten zugeführten Frischwassers ausgeschwemmt werden können, um mit der Abwasserströmung über den Überlauf aus dem Behälter ausgetragen zu werden. Die Geschwindigkeit der durch das unbelastete Spülwasser erzeugten, nach oben gerichteten Strömung darf dabei die Sinkgeschwindigkeit der Sandkörner nicht übersteigen, damit das Absetzen der Sandkörner im Bodenbereich nicht gestört wird. Der im Bodenbereich abgesetzte Sand bildet außerdem eine Sperre für die organischen Stoffe, die somit nicht in den Einlaufbereich des Austragsförderers gelangen können. Voraussetzung hiefür ist allerdings, daß die Höhe des im Bodenbereich des Behälters abgesetzten Sandes ein Mindestmaß nicht unterschreitet. Zur Sicherstellung eines solchen ständigen Sandkuchens darf daher der Sand nur in einer Menge ausgetragen werden die höchstens dem Zuwachs des Sandes über die Mindesthöhe hinaus entspricht.

Zur Durchführung des erfindungsgemäßen Verfahrens kann von einer Vorrichtung ausgegangen werden, die aus einem stehenden Behälter mit einem Überlauf für das mit organischen Stoffen belastete Abwasser und mit einem an eine untere Austragsöffnung des Behälters angeschlossenen Austragsförderer besteht. Zusätzlich muß der Behälter jedoch ein sich bis in den Bodenbereich erstreckendes Rührwerk und im Bodenbereich eine Frischwasserzufuhr aufweisen, wozu noch kommt, daß für den Antrieb des Austragsförderers eine Steuereinrichtung vorzusehen ist, die dem Antrieb des Austragsförderers in Abhängigkeit von der Absetzhöhe des Sandes im Behälter steuert. Mit Hilfe der Steuereinrichtung wird für eine ausreichende Mindesthöhe des im Bodenbereich abgesetzten Sandes gesorgt, weil der Antrieb des Austragsförderers stets dann abgestellt wird, wenn der abgesetzte Sandkuchen auf die vorgegebene Mindesthöhe abgetragen wurde. Die Zufuhr des mit Sand und organischen Stoffen beladenen Abwassers zum Behälter kann dabei kontinuierlich oder chargenweise erfolgen. Entscheidend ist, daß der abgesetzte Sand eine vorgegebene Mindesthöhe aufweist, die nicht unterschritten werden darf und in Abhängigkeit von den anfallenden Abwässern gewählt wird. Falls keine Erfahrungswerte vorliegen, kann diese Mindesthöhe durch einfache Versuche bestimmt werden.

Die Absetzhöhe des Sandes im Behälter kann in unterschiedlicher Weise bestimmt werden. Da die Erfassung der Absetzhöhe des Sandes mit Hilfe von in den Behälter eingesetzten Fühlern im allgemeinen auf Schwierigkeiten stößt, empfiehlt es sich, den Antrieb für den Austragsförderer in Abhängigkeit von der Belastung des Rührwerkantriebes über die Steuereinrichtung zu steuern. Mit steigender Absetzhöhe des Sandes nimmt der Rührwiderstand zu, was sich in einer steigenden Belastung des Rührwerkantriebes bemerkbar macht, die vergleichsweise einfach erfaßt und zur Steuerung des Austragsförderers herangezogen werden kann. Besonders einfache Konstruktionsverhältnisse ergeben sich in diesem Zusammenhang bei Verwendung eines Elektromotors für den Rührwerkantrieb, weil in diesem Fall der Antrieb für den Austragsförderer in Abhängigkeit von der Stromaufnahme des Elektromotors für den Rührwerkantrieb gesteuert werden kann.

Um einen gleichmäßigen Aufbau des Sandkuchens einerseits und ein gleichmäßiges Austragen des abgesetzten Sandes anderseits zu unterstützen, kann in weiterer Ausbildung der Erfindung das mit Rührarmen auf einer Rührwelle ausgerüstete Rührwerk oberhalb der Austragsöffnung im Boden des Behälters auf der Rührwelle eine Scheibe tragen, die nach unten gegen den Behälterboden vorragende Rührfinger aufweist. Diese Scheibe, die sich innerhalb des ständigen Sandkuchens befindet, bewirkt einen gleichmäßigen Schichtaufbau des Sandkuchens, insbesondere wenn der Behälter im Bereich der Austragsöffnung eine zylindrische Form aufweist. Durch diese Scheibe wird nämlich die Ausbildung eines Schüttrichters während des Austragens des Sandes über den Austragsförderer unterbunden. Die gegen den Boden vorragenden Rührfinger ergeben eine vorteilhafte Rührwirkung, wobei die Bildung von das Nachströmen von Sand behindernden Brücken vermieden wird. Die Scheibe selbst unterstützt außerdem die Verteilung der Spülströmung durch das eingeleitete Frischwasser, das bei einer Zuführung durch die Austragsöffnung im Behälterboden entlang der Scheibenunterseite über den Umfang verteilt radial nach außen strömt.

Damit eine über den Boden gleichmäßige Rührwirkung durch die Rührfinger der Scheibe erzielt wird, können die Rührfinger auf der Scheibe mit unterschiedlichem Abstand von der Rührwelle angeordnet werden, so daß diese Rührfinger in konzentrischen Kreisen bewegt werden.

In der Zeichnung ist der Erfindungsgegenstand beispielsweise dargestellt. Es zeigen
- Fig. 1: eine erfindungsgemäße Vorrichtung zum Abscheiden von Sand aus mit Sand und organischen Stoffen beladenem Abwasser nach der Erfindung in einem schematischen Axialschnitt,
- Fig. 2: diese Vorrichtung in einer zum Teil aufgerissenen Draufsicht und
- Fig. 3: eine der Fig. 1 entsprechende Darstellung einer Ausführungsvariante.

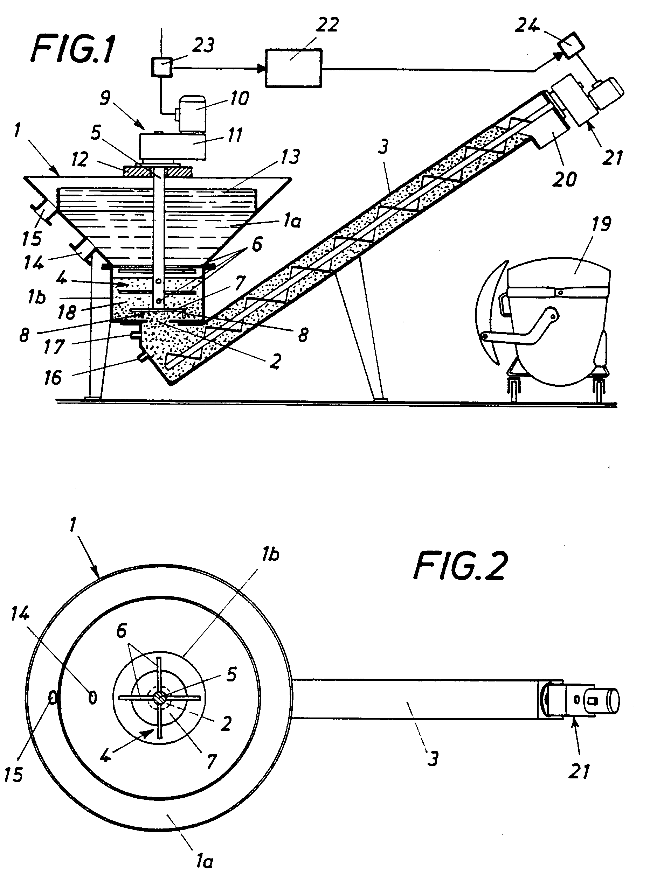

Die dargestellte Vorrichtung zum Abscheiden von Sand aus Abwässern besteht gemäß den Fig. 1 und 2 im wesentlichen aus einem stehenden Behälter 1, der einen oberen konischen Abschnitt 1a und einen unteren zylindrischen Abschnitt 1b aufweist, an den über eine bodenseitige Austragsöffnung 2 ein schräg nach oben ansteigender Austragsförderer 3, vorzugsweise ein Schneckenförderer, anschließt. Im zylindrischen Abschnitt 1b des Behälters 1 ist ein Rührwerk 4 vorgesehen, das eine Rührwelle 5 mit radial abstehenden Rührarmen 6 besitzt und am unteren Ende der Rührwelle 5 eine die Austragsöffnung 2 mit axialem Abstand abdeckende Scheibe 7 trägt, an der gegen den Behälterboden vorragende Rührfinger 8 vorgesehen sind, deren radialer Abstand von der Rührwelle 5 unterschiedlich gewählt ist, um eine gleichmäßigere Rührwirkung über die Fläche der Scheibe 7 sicherzustellen. Der Rührwerkantrieb 9 umfaßt einen Elektromotor 10 mit einem Untersetzungsgetriebe 11 und ist auf einem die obere Behälteröffnung überbrückenden Träger 12 gelagert.

Der konische Abschnitt 1a des Behälters wird durch einen von der Behälterwand aufragenden, ringförmigen Überlauf 13 in einen Abwasserzulaufteil und einen Abwasserablaufteil getrennt, wobei in den Abwasserzulaufteil eine Abwasserzulaufleitung 14 mündet, während das übergelaufene Abwasser über eine Ableitung 15 abgezogen wird.

Im Bereich des Einlaufes des Austragsförderers 3 ist eine Frischwasserzuleitung 16 vorgesehen, über die durch die Austragsöffnung 2 Frischwasser gepumpt werden kann. Zusätzlich könnte über eine Druckluftleitung 17 Druckluft zugeführt werden, um die Wirkung des Spülwassers und damit das Ausschwemmen der anorganischen Stoffe zu unterstützen, was jedoch nur in Sonderfällen erforderlich ist.

Das zum Abscheiden des Sandes über die Abwasserzulaufleitung 14 in den Behälter 1 gepumpte Abwasser wird einerseits durch das umlaufende Rührwerk 4 und anderseits durch das von unten über die Frischwasserzuleitung 16 zugeführte Frischwasser in eine Umlaufströmung versetzt, in der die spezifisch leichteren organischen Stoffe nach oben zum Überlauf 13 bewegt werden, während die spezifisch schwereren Sandkörner gegen den Behälterboden absinken und dort einen Sandkuchen 18 bilden, der jedoch vom Rührwerk 4 mechanisch gerührt wird, so daß sich die einzelnen Sandkörner aneinanderreiben und dabei allenfalls anhaftende organische Stoffe abgerieben werden. Diese abgeriebenen organischen Stoffe werden mit Hilfe der durch das zugeführte Frischwasser erzeugten, aufwärts gerichteten Strömung zum Überlauf 13 mitgenommen, über den die organischen Stoffe mit dem Abwasser ausgeschwemmt werden. Der abgesetzte Sandkuchen 18 kann dann vom Austragsförderer 3 in einen Auffangbehälter 19 ausgetragen werden, wobei gleichzeitig eine Entwässerung des ausgetragenen Sandes erfolgt, weil das Austragsende 20 des Austragsförderers 3 höher als der Überlauf 13 liegt. Die über der Austragsöffnung 2 im Behälterboden angeordnete Scheibe 7 verhindert die Ausbildung eines ausgeprägten Auslauftrichters im Sandkuchen 18, dessen schichtartiger Aufbau zufolge der Sichtwirkung des Rührwerkes 4 weitgehend erhalten bleibt.

Entscheidend für die Trennung des Sandes von den organischen Stoffen ist, daß stets ein Sandkuchen 18 mit einer vorgegebenen Mindesthöhe vorhanden ist. Dies bedeutet, daß über den Austragsförderer 3 höchstens eine dem jeweiligen Sandzuwachs über diese Mindesthöhe hinaus entsprechende Sandmenge ausgefördert werden darf. Um diese Mindesthöhe für den Sandkuchen 18 sicherzustellen, wird der Antrieb 21 für den Austragsförderer 3 in Abhängigkeit von der vorgegebenen Mindesthöhe des abgesetzten Sandes gesteuert. Zu diesem Zweck ist eine Steuereinrichtung 22 vorgesehen, die in der Fig. 1 in einem Blockschaltbild angedeutet ist, und den Antrieb 21 des Austragsförderers 3 in Abhängigkeit von der Stromaufnahme des Elektromotors 10 des Rührwerkantriebes 9 steuert. Da mit zunehmender Höhe des Sandkuchens 18 der Rührwiderstand und damit die Stromaufnahme des Elektromotors 10 ansteigt, kann über einen Meßwertgeber 23 die Stromaufnahme des Elektromotors 10 erfaßt und der Steuerung 22 zugrundegelegt werden. Steigt die Stromaufnahme über einen vorgegebenen oberen Grenzwert an, so wird durch die Steuereinrichtung 22 der Antrieb 21 des Austragsförderers 3 über einen Schalter 24 eingeschaltet und Sand aus dem Behälter 1 ausgetragen, bis die Stromaufnahme einen der Mindesthöhe des Sandkuchens 18 entsprechenden Wert erreicht, der das Ausschalten des Austragsförderers 3 bedingt.

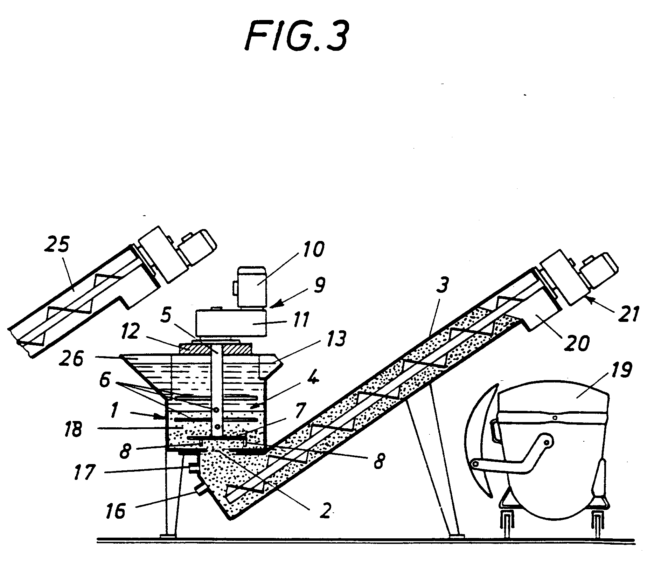

Die Vorrichtung nach der Fig. 3 unterscheidet sich von der gemäß den Fig. 1 und 2 lediglich durch die Ausbildung des Behälters 1 und die Zu- und Abförderung des Abwassers. Es wird ein im wesentlichen zylindrischer Behälter 1 eingesetzt, der über einen Schneckenförderer 25 mit dem belasteten Abwasser über einen Einlauf 26 beschickt wird. Der Überlauf 13 wird durch einen Auslauf gebildet. Die Wirkungsweise hinsichtlich der Tennung des Sandes von den organischen Stoffen bleibt gleich. Es kommt wieder darauf an, daß ein entsprechender Sandkuchen 18 aufrecht bleibt, der einerseits für einen Abrieb der organischen Stoffe sorgt und anderseits einen Austritt von organischen Stoffen durch die Austragsöffnung 2 im Zusammenwirken mit der unbelasteten Spülflüssigkeit verhindert.

Mit Hilfe einer solchen Versuchsanordnung konnten bei Einsatz eines Behälters mit einem Durchmesser von 80 cm und einer Höhe von 65 cm beispielsweise 800 kg Sand aus einem etwa zu gleichen Teilen mit Sand und organischen Stoffen belasteten Abwasser in 5 Stunden abgetrennt werden. Das Rührwerk wurde dabei mit 4 bis 5 Umdrehungen/min angetrieben. Spülwasser wurde in einer Menge von 0,35l/sec zugeführt. Die Mindesthöhe des ständigen Sandkuchens betrug 12 cm. Der Austragsförderer wurde beim Erreichen einer Höhe des abgesetzten Sandes von 30 cm eingeschaltet. Untersuchungen des abgetrennten Sandes ergaben bei einer Trocknung bis Gewichtskonstanz einen Wasseranteil von 5,2 Gew. % und einen Anteil an organischen Stoffen von 1,7 Gew. %, wobei sich der Anteil an organischen Stoffen durch eine Verlängerung der Behandlungszeit im Behälter weiter verringern läßt.

## Patentansprüche

1. Verfahren zum Abscheiden von Sand aus mit Sand und organischen Stoffen beladenem Abwasser, das in einem stehenden Behälter (1) in eine Umlaufströmung versetzt wird, in der die organischen Stoffe nach oben zu einem Überlauf (13) bewegt werden, während der Sand nach unten zu einem über eine untere Austragsöffnung (2) an den Behälter (1) angeschlossenen Austragsförderer (3) absinkt und erst nach einer Absetzzeit ausgetragen wird, dadurch gekennzeichnet, daß der abgesetzte Sand unter gleichzeitiger Spülung mit von unten zugeführtem Frischwasser mechanisch gerührt und lediglich in einer Menge ausgetragen wird, die eine vorgegebene Mindesthöhe des abgesetzten Sandes sicherstellt.

2. Vorrichtung zur Durchführung des Verfahrens nach Anspruch 1, bestehend aus einem stehenden Behälter (1) mit einem Überlauf (13) für das mit organischen Stoffen belastete Abwasser und mit einem an eine untere Austragsöffnung (2) des Behälters (1) angeschlossenen Austragsförderer (3) dessen Austragsende (20) höher als der Überlauf (13) des Behälters (1) liegt, dadurch gekennzeichnet, daß der Behälter (1) ein sich bis in den Bodenbereich erstreckendes Rührwerk (4) und im Bodenbereich eine Frischwasserzufuhr (16) aufweist und daß für den Antrieb (21) des Austragsförderers (3) eine Steuereinrichtung (22) vorgesehen ist, die den Antrieb (21) des Austragsförderers (3) in Abhängigkeit von der Absetzhöhe des Sandes im Behälter (1) steuert.

3. Vorrichtung nach Anspruch 2, dadurch gekennzeichnet, daß die Steuereinrichtung (22) den Antrieb (21) für den Austragsförderer (3) in Abhängigkeit von der Belastung des Rührwerkantriebes (9) steuert.

4. Vorrichtung nach Anspruch 3, dadurch gekennzeichnet, daß bei Verwendung eines Elektromotors (10) für den Rührwerkantrieb (9) die Steuereinrichtung (22) den Antrieb (21) für den Austragsförderer (3) in Abhängigkeit von der Stromaufnahme des Elektromotors (10) für den Rührwerkantrieb (9) steuert.

5. Vorrichtung nach einem der Ansprüche 2 bis 4, **dadurch gekennzeichnet**, daß das eine Rührwelle (5) und Rührarme (6) aufweisende Rührwerk (4) eine Scheibe (7) umfaßt, wobei die Scheibe (7) oberhalb der im Boden des Behälters (1) vorgesehenen Austragsöffnung (2) angeordnet ist und nach unten gegen den Behälterboden vorragende Rührfinger (8) aufweist.

6. Vorrichtung nach Anspruch 5, dadurch gekennzeichnet, daß die Rührfinger (8) auf der Scheibe (7) mit unterschiedlichem Abstand von der Rührwelle (5) angeordnet sind.

## Claims

1. A method of separating sand from waste water laden with sand and organic substances, the waste water, in a stationary vessel (1), being set into a circulatory flow in which the organic substances migrate upwards to an overflow (13), while the sand sinks downwards to a discharge conveyor (3) connected to the vessel (1) via a lower discharge opening (2) and is discharged only after a settling period, characterised in that the settled sand is mechanically stirred while being simultaneously rinsed with fresh water supplied from below and is discharged only in a quantity which ensures a predetermined minimum height of the settled sand.

2. Apparatus for carrying out the method according to claim 1, comprising a stationary vessel (1) with an overflow (13) for the waste water laden with organic substances, and a discharge conveyor (3) which is connected to a lower discharge opening (2) of the vessel (1) and the discharge end (20) of which is arranged higher than the overflow (13) of the vessel (1), characterised in that the vessel (1) has a stirrer (4) extending into the base region and a fresh-water supply (16) in the base region, and in that a control device (22) is provided for the drive (21) of the discharge conveyor (3) and controls the drive (21) of the discharge conveyor (3) as a function of the settling height of the sand in the vessel (1).

3. Apparatus according to claim 2, characterised in that the control device (22) controls the drive (21) for the discharge conveyor (3) as a function of the loading of the stirrer drive (9).

4. Apparatus according to claim 3, characterised in that, when an electric motor (10) is used for the stirrer drive (9), the control device (22) controls the drive (21) for the discharge conveyor (3) as a function of the current consumption of the electric motor (10) for the stirrer drive (9).

5. Apparatus according to any one of claims 2 to 4, characterised in that the stirrer (4), having a stirring shaft (5) and stirring arms (6), comprises a disc (7) arranged above the discharge opening (2) provided in the base of the vessel (1) and having stirring fingers (8) projecting down towards the vessel base.

6. Apparatus according to claim 5, characterised in that the stirring fingers (8) are arranged on the disc (7) at varying distances from the stirring shaft (5).

## Revendications

1. Procédé permettant d'extraire du sable d'eaux usées chargées en sable et en substances organiques, transférées dans un réservoir vertical (1) dans un écoulement en circulation, dans lequel les matières organiques sont déplacées vers le haut vers un trop-plein (13), tandis que le sable tombe vers le bas vers un transporteur d'évacuation (3) raccordé par une ouverture d'évacuation (2) au réservoir (1) et est évacué immédiatement après un temps de dépôt,
caractérisé en ce que
le sable déposé est mécaniquement agité par un rinçage simultané avec de l'eau fraîche amenée du bas et est évacué simplement en une quantité qui assure une hauteur minimale préfixée du sable déposé.

2. Dispositif de réalisation du procédé selon la revendication 1, se composant d'un réservoir vertical (1) avec un trop-plein (13) pour les eaux usées chargées de matières organiques et avec un transporteur d'évacuation (3) raccordé à une ouverture inférieure d'évacuation (2) du réservoir (1), transporteur dont l'extrémité d'évacuation (20) se situe plus haut que le trop-plein (13) du réservoir (1),
caractérisé en ce que
le réservoir (1) comporte un agitateur (4) s'étendant dans la zone du fond et une amenée d'eau fraîche (16) dans la zone du fond et en ce qu'est prévu un mécanisme de commande (22) pour l'entraînement (21) du transporteur d'évacuation (3) qui commande l'entraînement (21) du transporteur d'évacuation (3) en fonction de la hauteur de dépôt du sable dans le réservoir (1).

3. Dispositif selon la revendication 2,
caractérisé en ce que
le mécanisme de commande (22) commande l'entraînement (21) du transporteur d'évacuation (3) en fonction de la charge de l'entraînement de l'agitateur (9).

4. Dispositif selon la revendication 3,
caractérisé en ce que
lors de l'utilisation d'un moteur électrique (10) pour l'entraînement de l'agitateur (9) le mécanisme de commande (22) commande l'entraînement (21) du transporteur d'évacuation (3) en fonction de la consommation de courant du moteur électrique (10) pour l'entraînement de l'agitateur (9).

5. Dispositif selon une des revendications 2 à 4,
caractérisé en ce que
l'agitateur (4), ayant un arbre (5) et des bras (6), comporte un disque (7), le disque (7) étant disposé au-dessus de l'ouverture d'évacuation (2) prévue dans le fond du réservoir (1) et comportant vers le bas des doigts d'agitateur (8) en saillie en direction du fond du réservoir.

6. Dispositif selon la revendication 5,
caractérisé en ce que
les doigts d'agitateur (8) sont disposés sur le disque (7) à une distance différente de l'arbre de l'agitateur (5).
